# EUROPEAN PATENT SPECIFICATION

(11) **EP 2 298 494 B1**
(45) Date of publication and mention of the grant of the patent: **10.10.2012**
(21) Application number: 10013272.9
(22) Date of filing: 28.07.2005
(51) Int. Cl.: B23Q 11/00

(54) **Tool holder with a suction system, an axial knuckle joint and a sensing device**
Werkzeughalter mit Saugsystem, axialem Gabelgelenk und einer Messvorrichtung
Support d'outils avec système d'aspiration, joint en charnière axial et dispositif de détection

(30) Priority: 10.06.2005 ES 200501394
(43) Date of publication of application: 23.03.2011
(62) Divisional of application: 05786096.7
(73) Proprietor: Loxin 2002, S.L., 31191 Pamplona (ES)
(72) Inventor: Baigorri Hermoso, Julián, 31191 Pamplona (ES)
(74) Representative: Schäfer, Matthias W.

(56) References cited:
- EP-A1- 1 279 464
- US-A- 5 848 859

## Description

This patent document relates, as its title indicates, to a tool holder with suction system of the type used in automatic machining systems with numerical control for the adaptation and securing of different machining tools, **characterised in that** it integrates in a single device the functionality of a conventional automatic tool holder, which can convey a retractable element for improving precision in the control of the depth of machining, and a suction system for the powder and swarf generated during the process, enabling in an embodiment the use of an axial knuckle joint in the sensing device that enables automatic adaptation to the irregularities of the surface to be machined with the subsequent reduction in machining error, and also enabling in another embodiment the use of a plurality of slide guides in the retractable elements for improving the sliding of the sensing element.

Multiple and varied types of tool holders for their use in automatic machining systems with numerical control are currently widely known. The function of these tool holders is the mechanical adaptation between the actual machining tool, for example a milling cutter, drill bit, and others, and the motor arm of the machine. The tool holders may essentially be of two types: fixed and retractable. In the fixed type the depth of machining may be controlled only by the coordinates supplied by the numerical control system that controls the automatic machining system. In the retractable type the tool holder itself allows a complementary dynamic correction of the machining depth coordinate to be effected in accordance with the possible imperfections or warped nature of the material to be machined, thereby achieving much greater precision.

During the standard process of machining the material, both types of tool holder, together with their corresponding connected tool, produce waste of different types, ranging from powder to swarf. This waste must be eliminated from the working surfaces and their surroundings for various reasons, principally because they may slow the work down and affect the precision of subsequent machining operations performed in the area around the same point, or even cause damage to the surface of the material (particularly in the case of swarf), although they may also be dangerous or even toxic for personnel in the vicinity of the machine, depending on the material that is being worked on. It should not be forgotten either that their elimination makes subsequent cleaning of the work premises easier to carry out.

In order to eliminate this waste, a wide variety of systems external to the tool holder are commonly known and have traditionally been used, such as manual or semi-automatic brushing, blowing by means of pressurized air channelled though a pipe, or suction by means of an external hood situated around the machining tool and the tool holder. Given their specific construction, they all present a limited effectiveness with a high percentage of wastage as they cause the suction or expulsion of waste in the areas around the machining point. Furthermore, the necessary suction pipes frequently lead to problems, become entangled and cause breakdowns both during normal operating and during the tool changing process. In addition they also suffer from a series of secondary problems mainly due to the fact that their adaptation to automatic machining systems is problematic and awkward, necessitating a complexity that impacts negatively on the functionality of the machine, increasing the time required for each operation and the economic cost of the machining.

Other solutions have been sought. For example patent US4101238 "Hole saw with particle-aspirating accessory for hand drill" presents a crown saw for forming large circular drill holes with hand drills and similar tools, provided with a simple particle-aspirating mechanism, but which suffers from the problem of using the actual crown saw as the suction hood, as a result of which the particles generated outside the cutting line cannot be aspirated. This system is designed for use solely in manual tools and cannot easily be applied to automatic machining systems.

Patent GB2082099 "Drilling chuck with jaw for hand drill", equivalent to EP0045754, presents a suction system for a hand-drill tool holder, without an extractor hood, suction being performed by means of an axial channel in the drill bit itself or similar tool. In addition to the fact that, due to its specific construction, it does not allow suction of the entire working area, it also present a serious problem in that it requires special drill bits or tools incorporating a suction channel, which makes them much more expensive and weaker. Furthermore, it is only designed for hand tools.

Other variations of this type of tool with a suction channel running through the machining tools themselves (drill bits, milling cutters, crown saws, etc) are protected by patents ES2102918 "Device for suctioning swarf by means of a hollow drill bit"; EP0558817 "Hollow milling cutter with device for evacuating powder"; EP0855244 "Suction device for a machine tool, especially for a drilling machine or a drilling-hammering machine"; and EP0738558 "Unit for swarf generated by a hollow milling tool". These all suffer from the same aforementioned drawbacks and problems: they are preferably suited to manual rather than automatic machines, and require a special machine tool that is not standard on the market, either hollow or with a suction channel, which presents the additional disadvantage of causing the absorption of particles only through the interior and not by one side of the tool, as a result of which the waste generated cannot be absorbed correctly.

EP 1279 464 A1 discloses a rotary tool, which drills out material from a workpiece, with a suction hood to extract the chips. The suction hood has a turbine, powered by the tool, as part of the tool holder.

From US 5 848 859 an improved drilling device is known for drilling normal holes in a workpiece surface. The improved drilling device includes a compliant drill head that comprises a drill housing and a pressure foot. The pressure foot for contacting the workpiece surface is connected to the drill housing at a universally swiveling joint. By contrast to the present invention the pressure foot contacts a portion of the workpiece surface, that is not normal to the drill axis and the pressure foot swivels relative to the drill housing as the pressure foot orients normal to the workpiece surface and thereby, the drill tool can be advanced and rotated toward and through the workpiece surface for drilling a normal hole in the workpiece surface.

The technical problems of the prior art are solved by a tool holder with suction system having the features of claim 1. Advantageous embodiments of the present invention are described in the dependent claims.

An axial knuckle joint is used in the sensing device that enables automatic adaptation to the irregularities of the surface to be machined, with the subsequent reduction in machining error. This axial knuckle joint consists of an additional metallic piece with a circular ring section, flat in its lower part and with the upper part provided with a convex curvature. The axial knuckle joint is housed in a machined concavity in the lower part of the sensing device, with a radius of curvature coinciding with the radius of curvature of the upper part of the axial knuckle joint, thereby enabling the angular movement of the axial knuckle joint in relation to the sensing device. In this concavity of the lower part of the sensing device are housed a plurality of magnets, preferably cylindrical in shape, distributed in the shape of a circular matrix around the cylindrical drill hole for the passage of the machining tool, and which, by means of magnetic attraction, keep the axial knuckle joint in its position, while also enabling it to make small angular movements in relation to the sensing device. A flat rabbet situated at the bottom of the cavity enables a reduction in this angular movement to a small value, thereby preventing excessive movement from stopping it from returning to its original position. Both the central through drill holes of the axial knuckle joint and the lower part of the sensing device must have a diameter that far exceeds that of the largest machine tool to be used, the purpose being to enable its passage and the movement of the ball-joint, thereby leaving sufficient surrounding space so that the suction system can collect the swarf, powder and excess elements.

Another feature of the invention is the existence of a group of through drill holes on the perimeter of the sensing device, surrounding the axial knuckle joint externally, with the dual purpose of improving the suction capacity of the tool holder and eliminating the possibility of a vacuum effect being caused in the interior of the suction chamber, which would absorb said hood, distorting contact with the piece.

The tool holder with suction system that is being presented provides multiple advantages over the systems currently available, the most important of which being that as everything is integrated into a single device, the automatic machining system does not have to spend any time positioning any auxiliary cleaning system, as a result of which the operating times are not affected, thereby bringing about cost improvements in process performance.

Another important advantage is that, as the tool holder with suction system is provided with the functionality of standard tool holders, it accepts conventional machining tools, such as milling cutters, drill bits, and countersink bits, without the need for these to be hollow or to be provided with any special channel. Furthermore, the cone providing the fastening to the machine may be any of those known and common on the market.

The suction nozzle can be situated around the machining tool, the suction of all the waste generated, both powder and swarf, takes place exactly at the point of machining, with the subsequent cleaning and improvement in the precision of the machining, as this prevents the possibility that swarf may slightly deflect the head of the machining tool during the process. Furthermore, as it is detachable and easily interchangeable, this suction nozzle may be optimised both in terms of size and in terms of type for the different types of machining tools fitted into the tool holder.

Another of the most important advantages offered by this tool holder is that the same suction system can be applied both to fixed-type tool holders and to those provided with a retractable element. The latter present a major advantage over known conventional systems in that, as the suction nozzle is connected to the retractable front element of the tool holder, the suction process and precision adapts perfectly to the variations originating from the aforementioned retractable element.

Another additional advantage is the fact that as both the fixed-type tool holder and the retractable type share the same connection elements, the two types may coexist perfectly in the tool holder storage device of the automatic machining system, with a consequent improvement in the flexibility and adaptation to the various functions to be performed.

The embodiment of the tool holder with suction system provided with a plurality of guide-columns presents the important additional advantage of eliminating the need to dispose of an anti-rotation lock or stopper, which is necessary in the retractable tool holder with single guide-column, while at the same time, thanks to the guidance provided by various guide-columns, possible swaying and error is reduced due to the variation of the horizontal angle during vertical movement, thereby contributing greatly to the machining precision of this tool holder.

In embodiments with a modified sensing device, this sensing device represents the contact element with the surface to be machined, especially in the case of drilling and countersinking, and presents the enormous advantage of keeping the tool holder perfectly perpendicular both in the case of machining materials with milled or very flat surfaces, as in the case of other types of non-millable materials such as carbon fibre, and whose surface by nature presents small irregularities, as opposed to the rigid and fixed sensing device, which causes slight alterations in terms of perpendicularity in the positioning of the tool holder on non-millable surfaces.

In order to better understand the object of the present invention, the attached drawings show a preferred practical embodiment of a retractable-type tool holder, another preferred practical embodiment of a fixed-type tool holder, both with suction, and a final example of a preferred practical embodiment of a retractable-type tool holder with suction, combining the variants of a plurality of guide-columns and a modified sensing device.

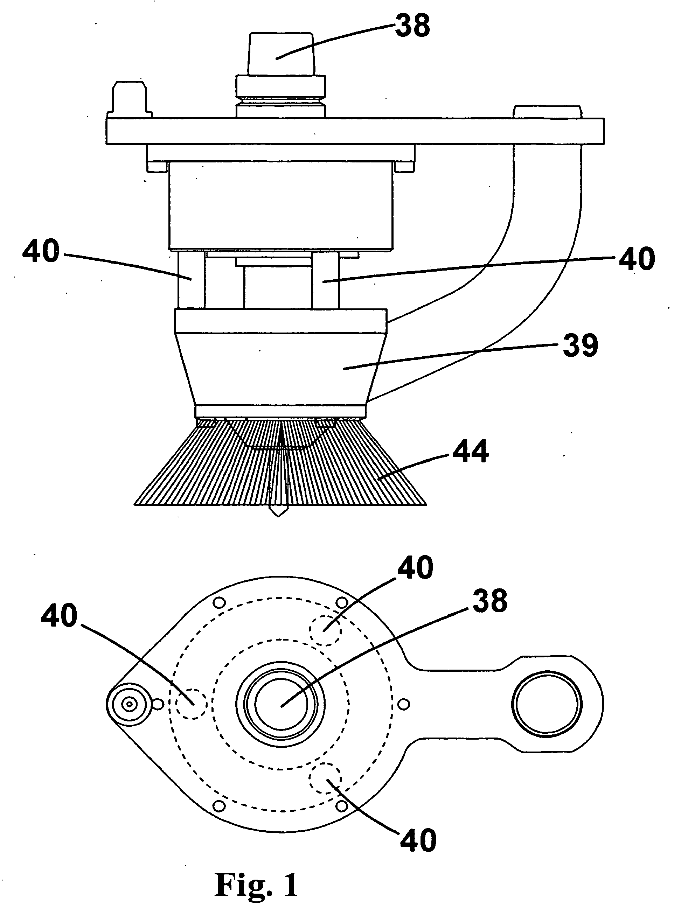

Figure 1 shows an external side and upper view of the retractable-type tool holder with suction, combining the variants of a plurality of guide-columns and a modified sensing device.

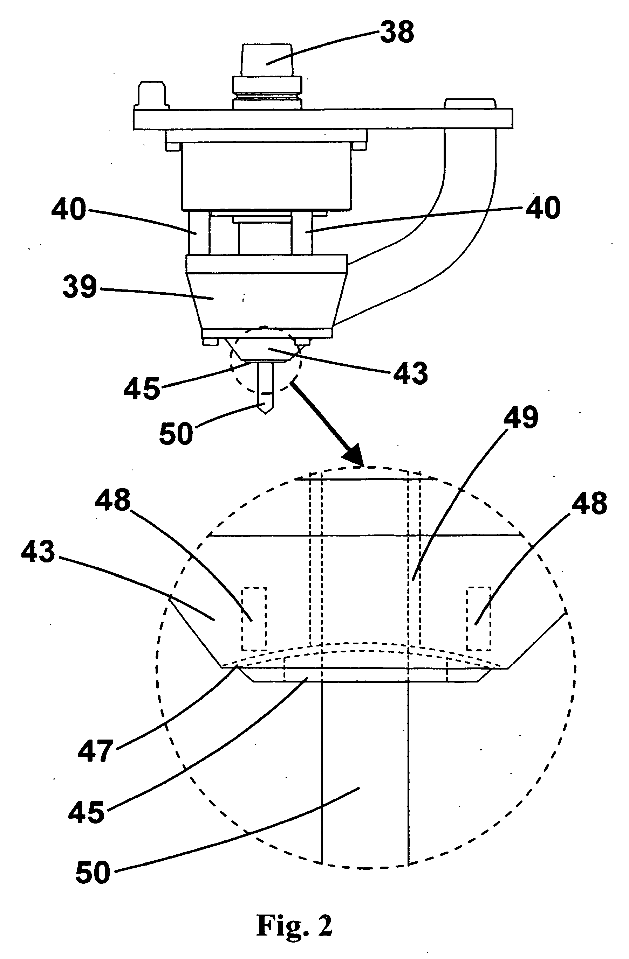

Figure 2 shows an enlarged detail of the sensing device of the retractable-type tool holder with suction combining the variants of a plurality of guide-columns and a modified sensing device, with a transparent view of the mobile axial knuckle joint unit, with the suction hood removed in order to facilitate the detail.

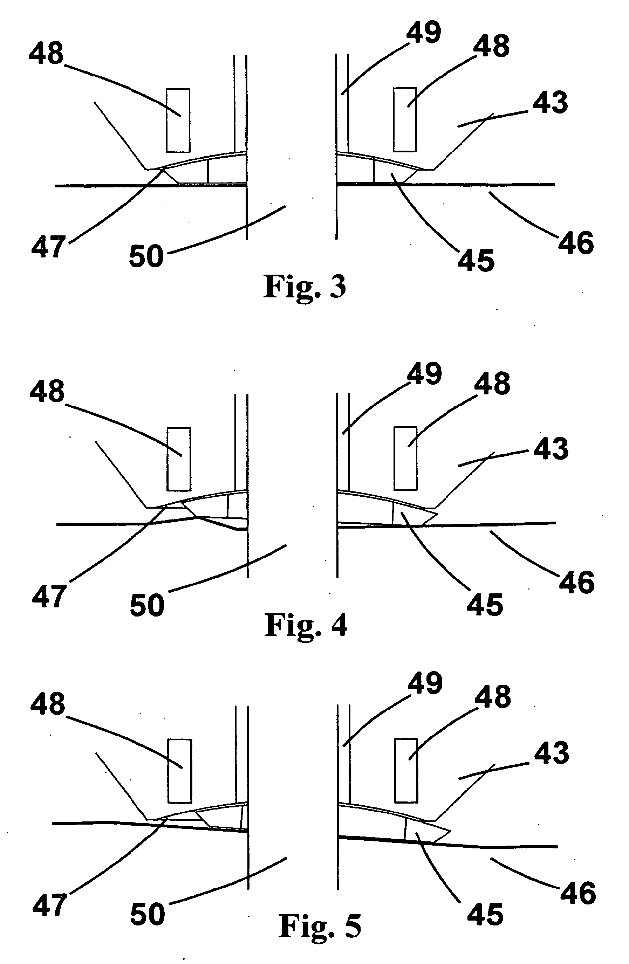

Figure 3 shows an example of the relative position between the axial knuckle joint and the sensing device in contact with a smooth or milled surface, with the suction hood removed in order to facilitate the detail.
Figure 4 shows an example of the relative position between the axial knuckle joint and the sensing device in contact with a surface with small irregularities, with the suction hood removed in order to facilitate the detail.
Figure 5 shows an example of the relative position between the axial knuckle joint and the sensing device in contact with a surface with greater irregularities, with the suction hood removed in order to facilitate the detail.

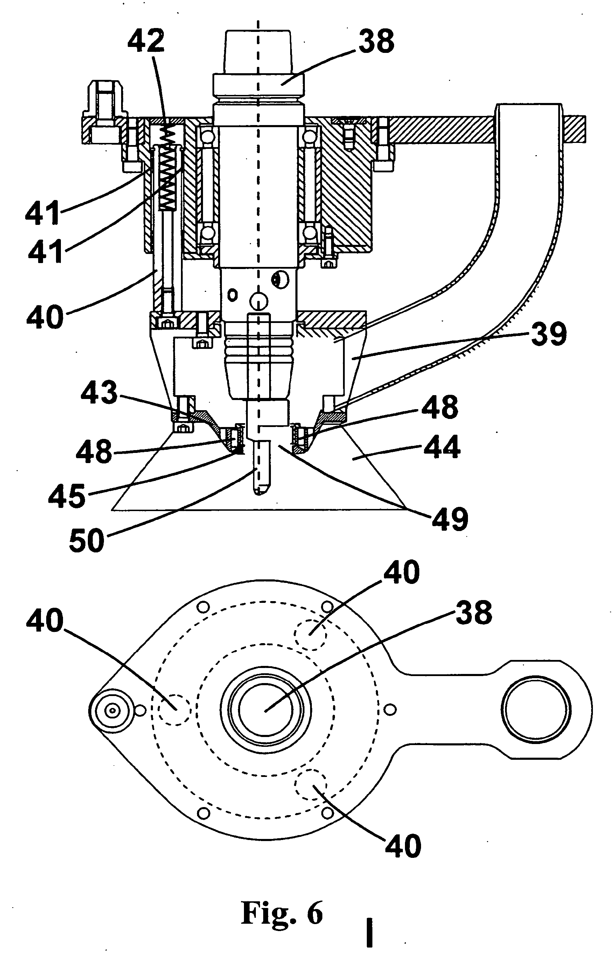

Figure 6 shows a sectional side and upper view of the retractable-type tool holder with suction, combining the variants of a plurality of guide-columns and a modified sensing device, showing the extraction pipe.

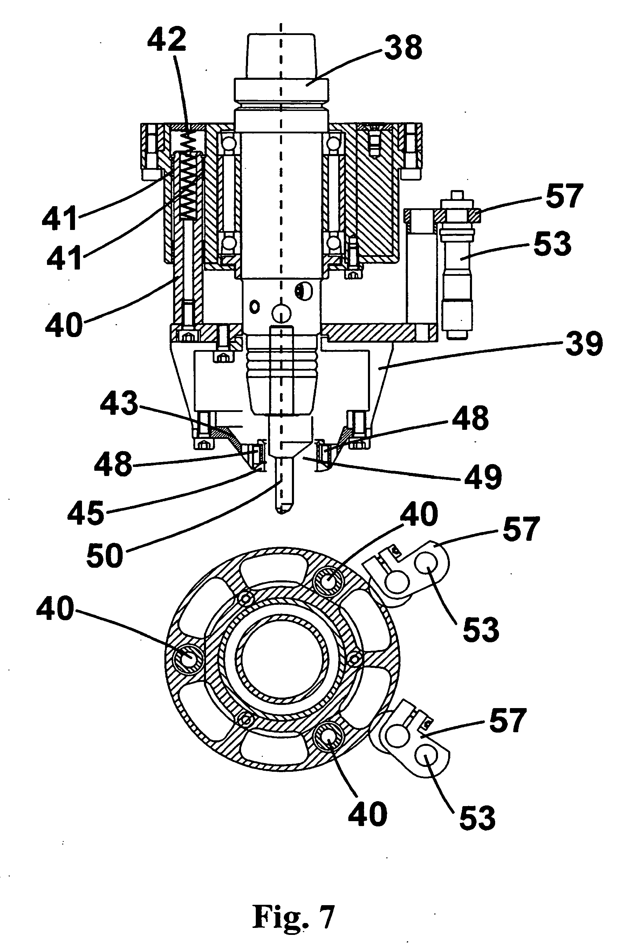

Figure 7 shows a sectional side and intermediate view of the retractable-type tool holder with suction, combining the variants of a plurality of guide-columns and a modified sensing device, showing the micrometric head units used in the end-of-stroke sensors, with the suction hood removed in order to facilitate the detail.

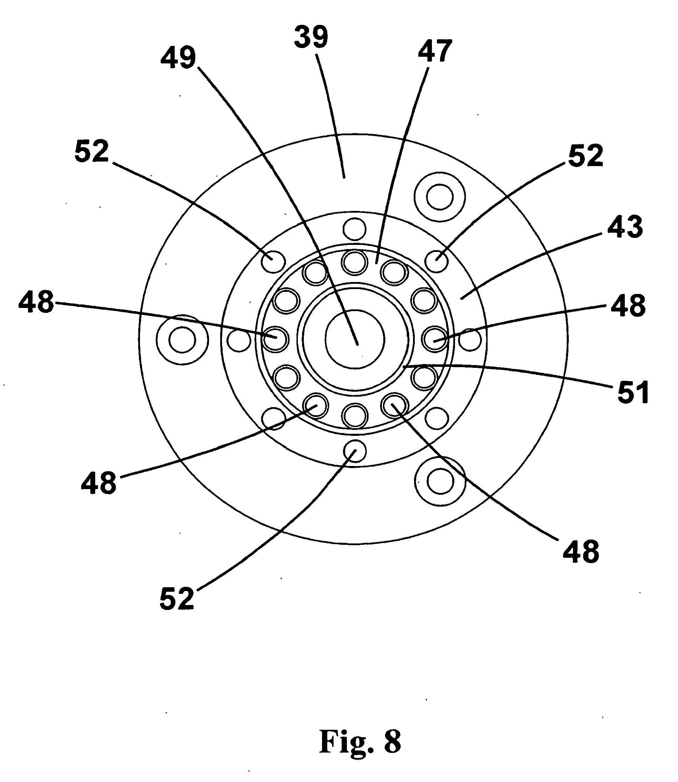

Figure 8 shows a lower view of the cylindrical unit, without the axial knuckle joint, showing the housing cavity, the housings of the magnets, the flat machining that acts as a stop and the complementary ventilation drill holes, with the suction hood removed in order to facilitate the detail.
Figure 9 shows a front view and a side view of the retractable-type tool holder, combining the variants of a plurality of guide-columns and a modified sensing device, connected to the motor arm of the machine or spindle, detailing the associated micrometric head units and end-of-stroke micro switches for adjusting the depth, with the suction pipe connected to the external extractor system.

The tool holder with suction system that is the object of this invention, may also be made in its retractable version, in an embodiment involving the replacement of the central and single guide-column, connected to the support and situated concentrically between the securing cone (38) and the cylindrical unit (39) of the tool holder in its retractable version, with a plurality guide-columns (40) of a smaller diameter, preferably three, distributed in the shape of a circular matrix around the securing cone (38), and being provided with the corresponding anti-friction elements (41), preferably in the form of bearings, and with the corresponding internal springs (42) in order to favour the rest state of the cylindrical unit (39).

Another embodiment is provided for, which is capable of being applied to all the aforementioned types of tool holder with suction system, both in its fixed version and in its retractable version, with one or more guide-columns, and consisting of a modification of the sensing device (43), or the lower terminal element of the cylindrical unit (39), situated inside the conical suction hood (44), involving the use of an axial knuckle joint (45) in the sensing device (43) that enables automatic adaptation to the irregularities of the surface (46) to be machined, with the subsequent reduction in machining error. This axial knuckle joint (45) consists of an additional metallic piece with a circular ring section, flat in its lower part and with the upper part provided with a convex curvature. The axial knuckle joint (45) is housed in a machined concavity (47) in the lower part of the sensing device (43), with a radius of curvature that coincides with the radius of curvature of the upper part of the axial knuckle joint (45), thereby enabling the angular movement of the axial knuckle joint (45) in relation to the sensing device (43).

Inside this concavity (47) of the lower part of the sensing device (43) are housed a plurality of magnets (48), preferably cylindrical in shape, distributed in the shape of a circular matrix around the cylindrical drill hole (49) for the passage of the machining tool (50), and which, by means of magnetic attraction, keep the axial knuckle joint (45) in its position, while also enabling it to make small angular movements in relation to the sensing device (43). A flat rabbet (51) situated at the bottom of the concavity (47) enables a reduction in this angular movement of the axial knuckle joint (45) to a small value, thereby preventing excessive movement from stopping it from returning to its original position.

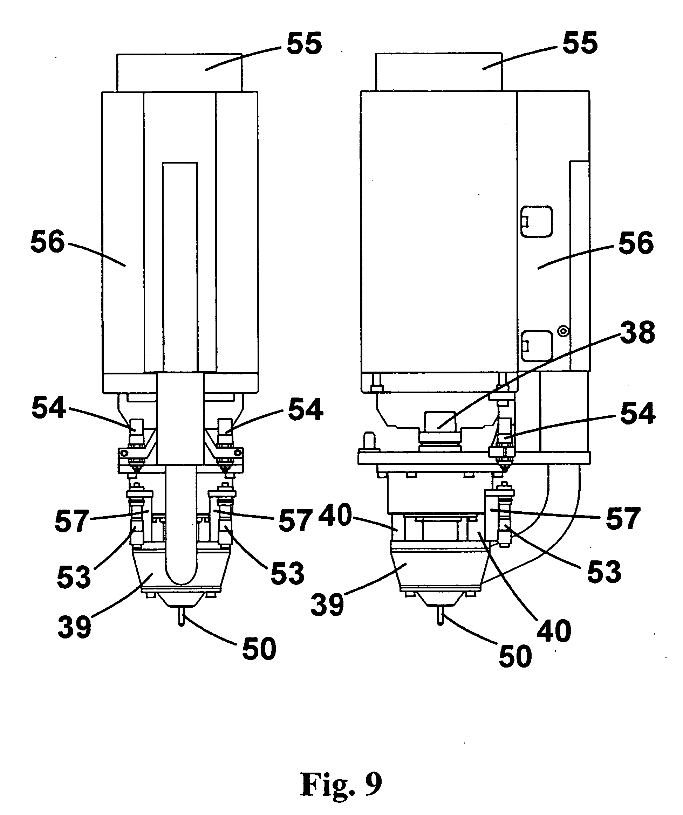

As in other embodiments the tool holder is also provided with various, preferably two, associated micrometric head units (53) and end-of-stroke micro switches (54) for adjusting the depth, the micrometric head units (53) normally being connected to the cylindrical unit (39), or mobile part, by means of fastening plates (57), and the electrical micro circuit-breakers (54) being installed on the upper fixed plate of the tool holder. We may find an example of these relative positions in Figure 9, in which we can also see how the tool holder is connected to the motor arm of the machine or spindle (55), and the suction pipe is connected to the extractor system (56).

As stated above, another characteristic of this embodiment of the invention is a group of through drill holes (52) on the perimeter of the sensing device (43), surrounding the axial knuckle joint (45) externally, with the dual purpose of increasing the suction capacity of the tool holder and eliminating the possibility of a vacuum effect being caused in the interior of the suction chamber, which would absorb said hood, distorting contact with the piece.

The conical suction hood (14,34), characteristic of this invention, permits various embodiments, applicable both to the fixed and retractable tool holder model in both versions, being formed in the preferred embodiment by a brush with a tapered shape, consisting of one or more rows of individual flexible fibres with a preferably cylindrical section. In an embodiment the conical suction hood (14, 34) is formed by a rigid or semi-rigid tapered piece, optionally provided with a plurality of complementary drill holes for the intake of air.

Having described the nature of the present invention in sufficient detail, in addition to the various forms of putting it into practice, all that remains to be added is that its description is not restrictive, and that variations both in materials and shapes and sizes can be made as defined in the appended claims.

## Claims

1. Tool holder with suction system of the type used in automatic machining systems with numerical control for the adaption and securing of different machining tools (50), in either a fixed or retractable version, wherein an axial knuckle joint (45) in a sensing device (43) is incorporated into the tool holder, and
the axial knuckle joint (45) is housed in a machined concavity in a lower part of the sensing device (43) with a radius of curvature coinciding with the radius of curvature of an upper part of the axial knuckle joint (45), thereby enabling an angular movement of the axial knuckle joint (45) in relation to the sensing device (43), thereby enabling automatic adaptation by contact of the axial knuckle joint (45) to the irregularities of a surface (46) to be machined, thereby the sensing device (43) being adapted to the surface (46) via the knuckle joint (45) with the subsequent reduction in machining error and the sensing device (43) incorporates on its perimeter a group of trough drill holes (52), surrounding the cylindrical drill hole (49) externally for the passage of the machining tool (50), with the dual purpose of improving the suction capacity of the tool holder and eliminating the possibility of a vacuum effect being caused in the interior of the suction chamber.

2. Tool holder with suction system according to claim 1, wherein the axial knuckle joint (45) consists of an additional metallic piece with a circular ring section, flat in its lower part and with the upper part provided with a convex curvature, being housed in a machined concavity (47) in the lower part of the sensing device (43), with a radius of curvature that coincides with the radius of curvature of the upper part of the axial knuckle joint (45), thereby enabling the angular movement of the axial knuckle joint (45) in relation to the sensing device (43).

3. Tool holder with suction system according to claims 1 or 2, wherein inside the concavity (47) of the lower part of the sensing device (43) are housed a plurality of magnets (48), preferably cylindrical in shape, distributed in the shape of a circular matrix around the cylindrical drill hole (49) for the passage of the machining tool (50), and which, by means of magnetic attraction, keep the axial knuckle joint (45) in its position, while also enabling it to make small angular movements in relation to the sensing device (43).

4. Tool holder with suction system according to claims 1, 2 or 3, wherein it comprises a flat rabbet (51) situated at the bottom of the concavity (47), which enables a reduction in the angular movement of the axial knuckle joint (45) to a small value.

## Patentansprüche

1. Ein Werkzeughalter mit Absaugsystem der Art, wie es in automatischen Bearbeitungssystemen mit CNC-Steuerung für die Adaption und Befestigung verschiedener Bearbeitungswerkzeuge (50) verwendet wird, in entweder eine festen oder einziehbaren Ausführung, wobei eine axiale Gelenkverbindung (45) in einer Erfassungsvorrichtung (43) in den Werkzeughalter integriert ist, und
die axiale Gelenkverbindung (45) in einer bearbeiteten Aushöhlung (47) in einem unteren Teil der Erfassungsvorrichtung (43) aufgenommen ist, mit einem Krümmungsradius, der mit dem Krümmungsradius eines oberen Teils der axialen Gelenkverbindung (45) zusammenfällt, wodurch eine Winkelbewegung der axialen Gelenkverbindung (45) in Bezug auf die Erfassungsvorrichtung (43) möglich ist, wodurch eine automatische Anpassung durch Kontakt der axialen Gelenkverbindung (45) an die Unregelmäßigkeiten der zu bearbeitenden Oberfläche (46) möglich ist, wodurch die Erfassungsvorrichtung (43) an die Oberfläche (46) über die axiale Gelenkverbindung (45) adaptiert ist mit der daraus resultierenden Reduzierung der Bearbeitungsfehler, und wobei die Erfassungsvorrichtung (43) an ihrem Rand eine Gruppe von Durchgangsbohrungen (52) enthält, die die zylindrische Bohrung (49) extern für den Durchtritt des Bearbeitungswerkzeugs (50) umgeben, mit dem doppelten Zweck die Saugleistung des Werkzeughalters zu verbessern und die Möglichkeit eines im Inneren der Saugkammer verursachten Vakuumeffekts zu verhindern.

2. Der Werkzeughalter mit Absaugsystem nach Anspruch 1, wobei die axiale Gelenkverbindung (45) ein zusätzliches metallisches Teil mit einem Kreisring-Abschnitt aufweist, flach in seinem unteren Teil und mit in dem oberen Teil ausgebildeter konvexen Krümmung, untergebracht in einer bearbeiteten Aushöhlung (47) im unteren Teil der Erfassungsvorrichtung (43), mit einem Krümmungsradius, der mit dem Krümmungsradius des oberen Teils der axialen Gelenkverbindung (45) zusammenfällt, wodurch die Winkelbewegung der axialen Gelenkverbindung (45) in Bezug auf die Erfassungsvorrichtung (43) möglich ist.

3. Der Werkzeughalter mit Absaugsystem nach einem der Ansprüche 1 oder 2, wobei innerhalb der Aushöhlung (47) des unteren Teils der Erfassungsvorrichtung (43) mehrere an Magnete (48), vorzugsweise in zylindrischen Form, aufgenommen sind, die in Form einer kreisförmigen Matrix, um die zylindrische Bohrung (49) für den Durchtritt des Bearbeitungswerkzeugs (50) verteilt sind und welche mittels magnetischer Anziehung die axiale Gelenkverbindung (45) in ihrer Position halten, während sie auch kleine Winkelbewegungen bezüglich der Erfassungsvorrichtung (43) ermöglichen.

4. Der Werkzeughalter mit Absaugsystem nach einem der Ansprüche 1, 2 oder 3, wobei dieser eine flache Nut (51), die am Boden der Aushöhlung (47) angeordnet ist aufweist, die eine Reduzierung der Winkelbewegung der axialen Gelenkverbindung (45) auf einen geringen Wert ermöglicht.

## Revendications

1. Support d'outils avec système d'aspiration du type de ceux utilisés dans les systèmes d'usinage automatiques à commande numérique pour l'adaptation et la fixation d'outils d'usinage différents (50), dans une version fixe ou rétractable, où un joint en charnière axial (45) est incorporé dans le support d'outils et où le joint en charnière axial (45) est logé dans une concavité usinée dans une partie inférieure d'un dispositif de détection (43) ayant un rayon de courbure qui coïncide avec le rayon de courbure d'une partie supérieure du joint en charnière axial (45) permettant ainsi le mouvement angulaire du joint en charnière axial (45) par rapport au dispositif de détection (43), permettant ainsi une adaptation automatique par le contact du joint en charnière axial (45) sur les irrégularités de la surface (46) à usiner, le dispositif de détection (43) étant adapté à la surface (46) par le biais du joint en charnière axial (45) suscitant une réduction de l'erreur d'usinage, et où le dispositif de détection (43) comprend sur son périmètre un groupe de percements forés (52), entourant l'extérieur d'un trou de forage cylindrique (49) prévu pour le passage de l'outil d'usinage (50), dans le double but d'améliorer la capacité d'aspiration du support d'outil et d'éliminer la possibilité d'un effet de vide provoqué à l'intérieur de la chambre d'aspiration.

2. Support d'outils avec système d'aspiration selon la revendication 1, dans lequel le joint en charnière axial (45) se compose d'une pièce métallique supplémentaire avec une section annulaire plate dans sa partie inférieure et dont la partie supérieure est munie d'une courbure convexe, et est logé dans une concavité usinée (47) dans la partie inférieure d'un dispositif de détection (43) ayant un rayon de courbure qui coïncide avec le rayon de courbure d'une partie supérieure du joint en charnière axial (45), permettant ainsi le mouvement angulaire du joint en charnière axial (45) par rapport au dispositif de détection (43).

3. Support d'outils avec système d'aspiration selon les revendications 1 ou 2, dans lequel est logée une multitude d'aimants (48), de préférence de forme cylindrique et répartis sous la forme d'une matrice circulaire autour du trou de forage cylindrique (49) prévu pour le passage de l'outil d'usinage (50), et qui, au moyen d'attraction magnétique, maintient le joint en charnière axial (45) dans sa position, tout en lui permettant d'effectuer de petits mouvements angulaires par rapport au dispositif de détection (43).

4. Support d'outils avec système d'aspiration selon les revendications 1, 2 ou 3, dans lequel est comprise une feuillure plane (51) située au fond de la concavité (47), qui permet une réduction du mouvement angulaire du joint en charnière axial (45) à une petite valeur.
